# EUROPÄISCHE PATENTANMELDUNG

(11) **EP 2 144 081 A1**
(43) Veröffentlichungstag der Anmeldung: **13.01.2010**
(21) Anmeldenummer: 08012473.8
(22) Anmeldetag: 10.07.2008
(51) Int. Cl.: G01S 7/40, G01S 13/93

(54) **Verfahren und Vorrichtung zur Steuerung von Sensoren eines Umfelderkennungssystems für Fahrzeuge**

(71) Anmelder: Valeo Schalter und Sensoren GmbH, 74321 Bietigheim-Bissingen (DE)
(72) Erfinder: Eidel, Oliver, 71696 Moeglingen (DE)

(57) **Zusammenfassung**

Es wird ein Verfahren und eine Vorrichtung zur Steuerung von Sensoren (4) eines Umfelderkennungssystems für Fahrzeuge (1) vorgeschlagen, bei dem mit den Sensoren (4) Hindernisse im Umgebungsbereich des Fahrzeugs (1) erfasst und in einer Auswertelektronik (5) ausgewertet werden. Der Erfassungsbereich (7a,7b,7c,7d) des mindestens eines Sensors (4) wird in Abhängigkeit vom Abstand des Fahrwerks zum Boden (8) gesteuert. Der Abstand zum Boden (8) kann dabei mit einem Detektor (11) oder mit einem Ausgangssignal einer Niveauregulierung erfasst werden und bei erhöhten Bodenabstand wird der Erfassungsbereich (7a,7b,7c,7d) durch eine elektronisch gesteuerte Verlagerung vertikal nach unten und bei verringertem Abstand zum Boden (8) der Erfassungsbereich (7a,7b,7c,7d) vertikal nach oben gelenkt.

## Beschreibung

### Stand der Technik

Die Erfindung betrifft ein Verfahren und eine Vorrichtung zur Steuerung von Sensoren eines Umfelderkennungssystems für Fahrzeuge, nach der Gattung des Hauptanspruchs und der nebengeordneten Ansprüche.

Es ist beispielsweise aus der DE 10 2004 029 038 A1 ein Parkassistenzsystem zur Unterstützung des Einparkens von Fahrzeugen bekannt, bei dem ein Umfelderkennungssystem zur Erzeugung von Informationen über Hindernisse oder Abstellflächenbegrenzungen mit Ultraschallsensoren an dem zu parkenden Fahrzeug gewonnen werden. Die Hindernisinformationen werden erzeugt, während das zu abzustellende Fahrzeug in der Nähe des Abstellbereichs, bzw. am Abstellbereich vorbeibewegt wird.

Zur Gewinnung der notwendigen Informationen werden beim Stand der Technik insbesondere Abstandsdaten zu Hindernissen, z.B. mit den Ultraschallsensoren, im Umgebungsbereich des Fahrzeugs ermittelt. Zur Ausführung des Parkassistenzsystems werden dann noch Geschwindigkeitsdaten, z.B. aus dem Antriebssystem oder aus entsprechenden Sensoren am Fahrzeug, Lenkwinkel- und Getriebestellungen ebenfalls aus einer entsprechend in den meisten Fahrzeugen üblicherweise auch für andere Steuerungsvorgänge eingesetzten Sensorik ausgewertet.

Entsprechende Steuersignale für das Hilfssystem zum Parken werden dann nach der erfolgten Auswertung der Sensordaten an eine Lenkunterstützungs- und/oder Geschwindigkeitsautomatik im Fahrzeug weitergeleitet. Für sich gesehen ist aus dem eingangs erwähnten Stand der Technik auch noch bekannt, wie geeignete Ultraschallsensoren am Fahrzeug angebracht werden können und wie die Einzelsensoren mit einem im wesentlichen kreisförmigen Abstandsquerschnitt die Umgebung abtasten können.

Diese bekannten Umfelderkennungssysteme, insbesondere im hinteren Bereich eines Fahrzeugs, sind in der Regel für einen normalen Bodenabstand des Fahrzeugs und für eine normale Höhe der Hindernisse eingestellt, so dass es ev. bei einer Änderung des Beladungsszustand eines Fahrzeugs hier zu Lücken in der Auswertung der Hindernisinformationen kommen kann.

Aus der DE 10 2004 055 372 A1 ist eine Einparkhilfe für ein Fahrzeug für sich gesehen bekannt, bei der ein Sensor derart am Fahrzeug angebracht ist, dass seine Abstrahlkeule und damit der Erfassungsbereich mittels einer Auslenkeinrichtung schwenkbar ist. Die Auslenkung erfolgt hier im wesentlichen horizontal beim Vorbeifahren des Fahrzeugs an einer Parklücke, sie ist aber grundsätzlich auch vertikal ausführbar.

### Darstellung der Erfindung

Die Erfindung geht von einem Verfahren zur Steuerung von Sensoren eines Umfelderkennungssystems für Fahrzeuge aus, bei dem mit den Sensoren Hindernisse im Umgebungsbereich des Fahrzeugs erfasst und in einer Auswertelektronik ausgewertet werden. Erfindungsgemäß wird in vorteilhafter Weise der Erfassungsbereich des mindestens einen Sensors in Abhängigkeit vom Bodenabstand des Fahrwerks gesteuert. Der Bodenabstand wir dabei in der Regel mit einem Detektor erfasst und bei erhöhten Bodenabstand der wird der Erfassungsbereich der Sensoren durch eine elektronisch gesteuerte Verlagerung vertikal nach unten und bei verringertem Bodenabstand der Erfassungsbereich vertikal nach oben gelenkt.

Zum Beispiel befinden sich der oder die hinsichtlich des Erfassungsbereichs zu optimierenden Sensoren und der Detektor zur Erfassung des Bodenabstandes im hinteren Bereich des Fahrzeugs; es sind aber alle anderen Varianten, wie vorn oder seitlich, möglich.

Vorzugsweise kann die Änderung des Erfassungsbereichs durch eine Veränderung des Schwellwerts und/oder der Empfindlichkeit der Sensoren vorgenommen werden, wobei die Veränderung des Schwellwerts und/oder der Empfindlichkeit der Sensoren in besonders vorteilhafter Weise mittels einer softwaregesteuerten Elektronik unter Auswertung der Hindernisse im Umgebungsbereich des Fahrzeugs vorgenommen wird.

Bei einer erfindungsgemäßen Vorrichtung zur Durchführung des zuvor beschriebenen Verfahrens ist in vorteilhafter Weise an der Rad- oder Achsaufhängung ein Weg-Mess-Detektor angebracht, mit dem aus einem bei einer Beladungsänderung des Fahrzeugs resultierenden Federweg ein zu der dadurch bewirkten Bodenabstandsänderung korrespondierendes elektrisches Signal erzeugbar ist, mit dem wiederum eine mechanische oder elektrische Einrichtung zur Anpassung des Erfassungsbereichs des mindestens einen Sensors steuerbar ist.

Alternativ hierzu kann bei einem Fahrzeugs mit einer Niveauregulierungseinrichtung das Ausgangssignal der Niveauregulierungseinrichtung ein bei einer Beladungsänderung des Fahrzeugs korrespondierendes elektrisches Signal erzeugen, mit dem die mechanische oder elektrische Einrichtung zur Anpassung des Erfassungsbereichs des mindestens einen Sensors steuerbar ist. In beiden Fällen kann das bei einer Beladungsänderung des Fahrzeugs korrespondierende elektrische Signal an einen Eingang der Auswerteelektronik geführt sein und die Auswerteelektronik stellt ein Steuersignal für die mechanische oder elektrische Steuereinrichtung des Sensors zur Verfügung.

Solche Umfelderkennungssysteme für Einparkhilfen bzw. Parkassistenzsysteme können in der Regel immer nur so empfindlich eingestellt werden, dass das System nicht den Boden detektiert. Den geringsten Abstand zum Boden haben die Sensoren, die beispielsweise im Heckstoßfänger des Fahrzeugs eingebaut sind, wenn das Fahrzeug voll beladen ist. Das heißt, dass das Umfelderkennungssystem in seiner Empfindlichkeit so stark gedrosselt sein muss, dass es im beladenen Zustand (worst-case) gerade den Boden nicht detektiert. Das bedeutet aber, dass das Umfelderkennungssystem im unbeladenen Zustand, zum Beispiel wenn nur der Fahrer im Fahrzeug sitzt, stark in seiner Empfindlichkeit reduziert ist.

Ein erfindungsgemäßes Umfelderkennungssystem, beispielsweise an der hinteren Radaufhängung, zum Beispiel am Federbein oder am Stoßdämpfer, erkennt nun mit den entsprechenden Detektoren den Beladungszustand am Fahrzeug. Aus dieser Information lässt sich der beladungsabhängig einzustellende Abstand zwischen den Sensoren und dem Boden ermitteln. Bei Fahrzeugen mit der zuvor erwähnten Niveauregulierungseinrichtung am Fahrwerk kann dieser Abstand direkt aus den Informationen aus dem Niveauregulierungs-Steuergerät ausgelesen und weiterverarbeitet werden.

Die Software des Umfelderkennungssystems nach der Erfindung kann nun die Systemempfindlichkeit der Sensoren so regeln, dass der Erfassungsbereich bzw. das Detektionsfeld der Sensoren optimal verändert bzw. vergrößert oder verkleinert wird, ohne die Fahrbahn oder den Boden selbst zu detektieren. Niedrige Hindernisse, die aber den Stoßfänger beispielsweise beim Rückwärtsfahren beschädigen können, wie z.B. hohe Bordsteine, die bisher im ungeregelten Umfelderkennungssystem nicht erkannt werden, werden mit dem erfindungsgemäßen Verfahren auf einfache Weise erkannt.

### Kurze Beschreibung der Zeichnung

Ausführungsbeispiele der Erfindung werden anhand der Figuren der Zeichnung erläutert. Es zeigen:
Figur 1 zeigt eine schematische Ansicht eines Fahrzeugs mit Abstandssensoren nach dem Stand der Technik,
Figur 2 eine Teilansicht eines Fahrzeugs mit einem Sensor und hoher Beladung,
Figur 3 eine Teilansicht eines Fahrzeugs mit einem Sensor und niedriger Beladung,
Figur 4 eine Detailansicht am Fahrzeug mit einem Ausführungsbeispiel eines erfindungsgemäßen Weg-Mess-Systems am hinteren Stoßdämpfer oder Federbein zur Ermittlung der Beladung,
Figur 5 eine Teilansicht eines Fahrzeugs mit einem Sensor und unterschiedlichen Erfassungs- oder Detektionsbereichen des Sensors bei unterschiedlichen Beladungen.

### Wege zur Ausführung der Erfindung

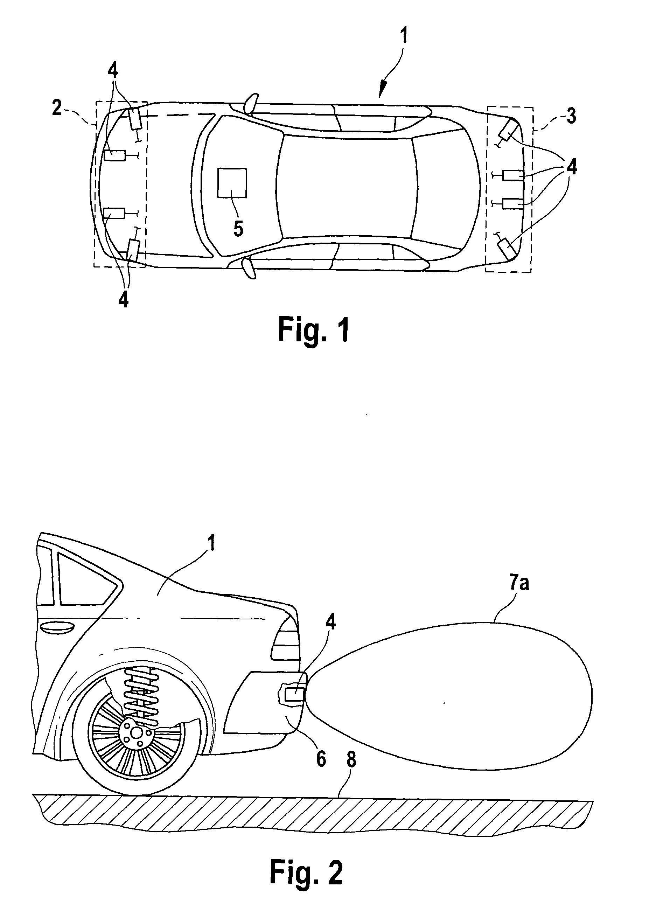

Aus Figur 1 ist ein Fahrzeug 1 zu entnehmen, das in der Nähe von hier nicht näher gezeigten Hindernissen abgestellt werden soll. Aus dem eingangs erwähnten Stand der Technik DE 10 2004 029 038 A1 ist hierzu bekannt, dass jeweils eine Detektoranordnung 2 an der Vorderseite und eine Detektoranordnung 3 an der Hinterseite des Fahrzeugs 1 mit Sensoren 4, beispielsweise Ultraschallsender und -empfänger, angebracht ist. Mit den Detektoranordnungen 2 und 3 sollen Abstandswerte zu den Hindernissen bei einem Park- oder Abstellvorgang erfasst werden.

Die Sensoren 4 der Detektoranordnungen 2 und 3 sind über entsprechende Kommunikationskanäle (z.B. CAN-Bus) mit einer in der Regel computergesteuerten Auswerteeinheit 5 im Fahrzeug 1 verbunden, die aus den Abstandsdaten der Sensoren 4 und den fahrzeugspezifischen Daten, wie zum Beispiel Geschwindigkeit und Lenkwinkel, ein Parkassistenzsystems für das Fahrzeug 1 bereitstellt, mit dem der zuvor erwähnte Park- oder Abstellvorgang durchführbar oder unterstützbar ist.

In Figur 2 ist die Heckpartie des Fahrzeugs 1 nach der Figur 1 als Teilseitenansicht gezeigt und es ist hier ein Sensor 4, beispielsweise ein hinlänglich bekannter Ultraschallsensor, als Bestandteil des erfindungsgemäßen Umfelderkennungssystems am hinteren Stoßfänger 6 angebracht. Der Sensor 4 weist einen Erfassungsbereich 7a mit einer Keulencharakteristik auf. Die Empfindlichkeit der Einzelsensoren des Sensors 4 wird hierbei durch die resultierende Ausbildung eines Erfassungsbereich 7a so eingestellt, dass ein Boden 8, zum Beispiel die Fahrbahn, in dem gezeigten voll beladenen Zustand gerade nicht detektiert wird.

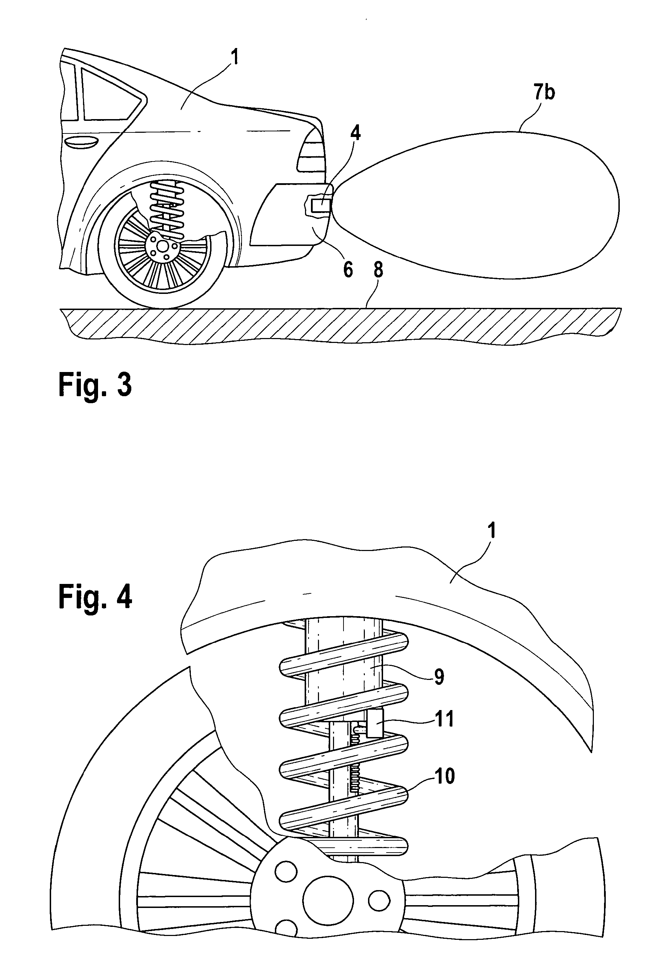

Figur 3 zeigt dagegen das Fahrzeug 1 im unbeladenen Zustand. Es ist hier erkennbar, dass ein Erfassungsbereich 7b mit einer entsprechenden Keulencharakteristik derart oberhalb des Bodens 8 gelagert ist, dass zum Beispiel niedrige Hindernisse, die jedoch groß genug sind genug sind um den Stoßfänger 6 oder eine Abgasanlage zu beschädigen, nicht detektiert werden.

Aus Figur 4 ist eine Detailansicht des Fahrzeugs 1 mit einem Ausführungsbeispiel eines erfindungsgemäßen Weg-Mess-Systems am hinteren Stoßdämpfer 9 oder am Federbein 10 zur Ermittlung der Beladung des Fahrzeugs 1. Hier ist ein Detektor 11 als Bestandteil einer Weg-Mess-Sytems zur Ermittlung des am Stoßdämpfer 9 zurückgelegten Weges vorhanden. Ein solches Weg-Mess-System kann jeweils an anderen geeigneten Bauteilen der Radaufhängung, hier ist es das linke Hinterrad nach der Figur 4, angebracht werden. Über das Einfedern der Hinterräder kann dann der Beladungszustand des Fahrzeugs 1, gegebenenfalls über die Auswerteelektronik 5 nach der Figur 1, ermittelt werden. Die Software der Auswerteelektronik 5 errechnet den Abstand zwischen dem Sensor 4 und dem Boden 8 und regelt die Empfindlichkeit, bzw., die Keulencharakteristik des Empfangsbereichs 7a oder 7b entsprechend nach.

Alternativ zu dem Ausführungsbeispiel nach der Figur 4 können bei einem Fahrzeug 1 mit einer hier nicht gezeigten Niveauregulierungseinrichtung auch Informationen aus dem Steuergerät der Niveauregulierungseinrichtung verwendet werden, um den Abstand zwischen dem Sensor 4 und dem Boden 8 zu errechnen.

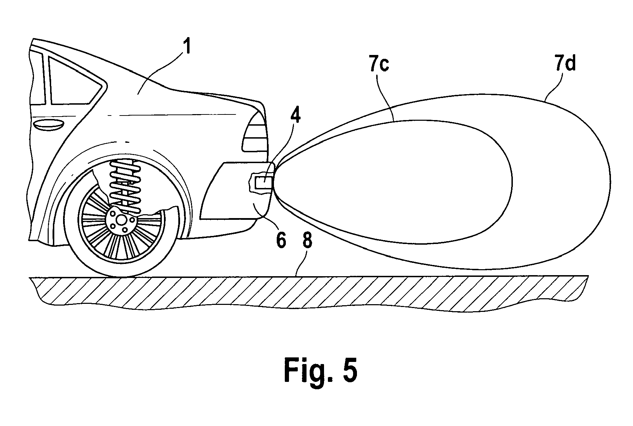

Figur 5 zeigt noch eine Teilansicht eines Fahrzeugs 1 mit einem Sensor 4 und unterschiedlichen Erfassungsbereichen des Sensors 4 bei unterschiedlichen Beladungen. Hier ist erkennbar, dass auf einfache Weise, zum Beispiel die Keulencharakteristik auch elektrisch verbreitert oder verringert werden kann, so dass die Detektionsleistung durch diese Regelung optimiert wird und auch niedrige oder schmale Hindernisse, die sich zwischen Sensoren 4 befinden, besser detektiert werden.

Mit einem Erfassungsbereich 7 c nach der Figur 5 ist ein Detektionsfeld als Erfassungsbereich eines Einparkhilfssystems gebildet, dass noch nicht geregelt ist und auf den äußersten Fall abgestimmt ist, bei dem das Fahrzeug 1 voll beladen ist oder die Niveauregulierung ganz nach unten, zum Beispiel bei einer Sportfahrwerksabstimmung, geregelt ist. Mit einem Erfassungsbereich 7 d nach der Figur 5 ist ein Detektionsfeld eines Einparkhilfssystems gebildet, dass optimal geregelt ist, durch eine entsprechend gesteuerte Empfindlichkeit bzw. des Erfassungsfeldes des Sensors 4 in Abhängigkeit vom Abstand des Sensors 4 zum Boden 8.

## Patentansprüche

1. Verfahren zur Steuerung von Sensoren eines Umfelderkennungssystems für Fahrzeuge (1), bei dem mit mindestens einem Sensor (4) Hindernisse im Umgebungsbereich des Fahrzeugs (1) erfasst und in einer Auswertelektronik (5) ausgewertet werden, **dadurch gekennzeichnet, dass** der Erfassungsbereich (7a,7b,7c,7d) des mindestens eines Sensors (4) in Abhängigkeit vom Abstand des Fahrwerks zum Boden (8) gesteuert wird.

2. Verfahren nach Anspruch 1, **dadurch gekennzeichnet, dass** der Abstand zum Boden (8) mit einem Detektor (11) erfasst wird und bei erhöhten Bodenabstand der Erfassungsbereich (7a,7b,7c,7d) der Sensoren durch eine elektronisch gesteuerte Verlagerung vertikal nach unten und bei verringertem Abstand zum Boden (8) der Erfassungsbereich (7a,7b,7c,7d) vertikal nach oben gelenkt wird.

3. Verfahren nach Anspruch 2, **dadurch gekennzeichnet, dass** die Änderung des Erfassungsbereichs (7a,7b,7c,7d) durch eine Veränderung des Schwellwerts und/oder der Empfindlichkeit der Sensoren (4) vorgenommen wird.

4. Verfahren nach Anspruch 3, **dadurch gekennzeichnet, dass** die Veränderung des Schwellwerts und/oder der Empfindlichkeit der Sensoren (4) mittels einer softwaregesteuerten Elektronik unter Auswertung der Hindernisse im Umgebungsbereich des Fahrzeugs (1) vorgenommen wird.

5. Verfahren nach einem der vorhergehenden Ansprüche, **dadurch gekennzeichnet, dass** der Abstand zum Boden (8) über ein Ausgangssignal einer Niveauregulierung des Fahrzeugs (1) erfasst wird.

6. Verfahren nach einem der vorhergehenden Ansprüche, **dadurch gekennzeichnet, dass** das Verfahren mit mindestens einem Sensor (4) und dem Detektor (11) zur Erfassung des Abstand zum Boden (8) im hinteren Bereich des Fahrzeugs (1) durchgeführt wird.

7. Vorrichtung zur Durchführung eines Verfahrens nach einem der vorhergehenden Ansprüche, **dadurch gekennzeichnet, dass** an der Rad- oder Achsaufhängung des Fahrzeugs (1) ein Detektor (11) als Weg-Mess-System angebracht ist, mit dem aus einem bei einer Beladungsänderung des Fahrzeugs (1) resultierenden Federweg ein zu der **dadurch** bewirkten Bodenabstandsänderung korrespondierendes elektrisches Signal erzeugbar ist, mit dem eine mechanische oder elektrische Einrichtung zur Auslenkung oder Veränderung des Erfassungsbereichs (7a,7b,7c,7d) des mindestens einen Sensors (4) steuerbar ist.

8. Vorrichtung zur Durchführung eines Verfahrens nach einem der Ansprüche 1 bis 6, **dadurch gekennzeichnet, dass** das Fahrzeugs (1) eine Niveauregulierungseinrichtung aufweist und mit einem Ausgangssignal der Niveauregulierungseinrichtung ein bei einer Beladungsänderung des Fahrzeugs (1) korrespondierendes elektrisches Signal erzeugbar ist, mit dem eine mechanische oder elektrische Einrichtung zur Auslenkung oder Veränderung des Erfassungsbereichs (7a,7b,7c,7d) des mindestens einen Sensors (4) steuerbar ist.

9. Vorrichtung nach Anspruch 7 oder 8, **dadurch gekennzeichnet, dass** das bei einer Beladungsänderung des Fahrzeugs korrespondierendes elektrisches Signal an einen Eingang der Auswerteelektronik (5) geführt ist und die Auswerteelektronik (5) ein Steuersignal erzeugt, mit dem eine mechanische oder elektrische Einrichtung zur Auslenkung oder Veränderung des Erfassungsbereichs (7a,7b,7c,7d) des mindestens einen Sensors (4) steuerbar ist.
